# DEMANDE DE BREVET EUROPEEN

(11) **EP 1 081 543 A1**
(43) Date de publication de la demande: **07.03.2001**
(21) Numéro de dépôt: 00402396.6
(22) Date de dépôt: 30.08.2000
(51) Int. Cl.: G03B 25/00

(54) **Dispositif d'éclairage apte à reproduire une animation de type cinématographique**

(30) Priorité: 31.08.1999 FR 9910956
(71) Demandeur: Cyann Holding, 75005 Paris (FR); Ecosse Régis, 75018 Paris (FR)
(72) Inventeur: Ecosse, Régis, 94230 Cachan (FR)
(74) Mandataire: Ballot, Paul

(57) **Abrégé**

L'invention concerne un dispositif d'éclairage apte à reproduire une animation de type cinématographique. Ce dispositif comporte une source lumineuse (S) et une armature. Il est caractérisé par le fait que l'armature comporte deux éléments (1) et (2) concentriques et de forme identique, aptes à tourner librement, l'un à l'intérieur de l'autre, dans des sens de rotation opposés l'un à l'autre, autour d'un axe (8) sur lequel est fixée la source lumineuse (S). Ce dispositif est destiné à la réalisation de lampes d'agrément pour le grand public et d'enseignes signalétiques.

## Description

La présente invention concerne un dispositif d'éclairage apte à reproduire une animation de type cinématographique. Ce type de dispositif est notamment destiné à la réalisation de lampes d'agrément pour le grand public et d'enseignes signalétiques.

Les recherches sur la reproduction du mouvement naturel qui ont précédé l'invention du cinématographe en 1895, ont conduit à la réalisation de dispositifs de type phénakistiscopes. Ce type de dispositif se présente en général sous forme d'un disque ou d'un cylindre supportant plusieurs images. La rotation du disque ou du cylindre permet de créer une illusion de mouvement pour un observateur qui regarde la succession rapide des images en un point fixe. Cependant, un phénakistiscope permet simplement d'animer des images se succédant, mais il ne permet pas d'éclairer et l'animation ne peut être observée que par l'individu qui manipule l'objet. Par conséquent, un dispositif de ce type ne permet pas de réaliser des lampes d'agrément ni des enseignes signalétiques.

D'autre part, de nombreux abats-jour aptes à tourner autour d'une source lumineuse pour projeter des images colorées sur un support translucide sont déjà commercialisés depuis plusieurs années. Cependant, avec ces dispositifs, les images sont projetées tous ensembles et de manière continue sur cet écran. La seule animation vient de la rotation de l'abat-jour autour de la source lumineuse qui fait tourner l'ensemble des images projetées. En aucun cas, ces articles ne permettent de reproduire une succession d'images afin de créer une animation de type cinématographique sur l'abat-jour.

Un but de l'invention consiste donc à réaliser un dispositif d'éclairage sur lequel apparaît en outre une animation de type cinématographique. Ainsi, tout observateur placé devant ce dispositif pourra visualiser l'animation.

Pour atteindre ce but, l'invention propose un dispositif d'éclairage comportant une source lumineuse et une armature, principalement caractérisé en ce que ladite armature comporte deux éléments concentriques et de forme identique, aptes à tourner librement, l'un à l'intérieur de l'autre, autour d'un axe sur lequel est fixée la source lumineuse.

Selon une autre caractéristique de l'invention, le premier élément de l'armature est constitué d'une paroi opaque percée de fentes obtenues par l'intersection du volume de la paroi et de plans contenant l'axe de rotation

Avantageusement, les fentes (3) sont parallèles à l'axe (8) de rotation.

Selon une autre caractéristique, le deuxième élément de l'armature est constitué d'une paroi translucide et supporte un décor destiné à être animé.

Selon une autre caractéristique, il comporte en outre une troisième paroi en matière translucide placée à l'intérieur ou à l'extérieur du plus petit des éléments et de l'armature ou sur les fentes du premier élément. De préférence, elle sera placée à l'intérieur des éléments.

Selon encore une autre caractéristique de l'invention, les deux éléments de l'armature tournent en sens inverse l'un par rapport à l'autre.

Selon une autre caractéristique il comprend des moyens d'entraînement pour obtenir le mouvement de rotation.

Les moyens d'entraînement sont obtenus par un moteur, ou par un mécanisme de ressort, ou manuellement ou par le déplacement d'un fluide : de l'air chaud, un gaz ou un liquide.

Selon un mode de réalisation, les deux éléments de l'armature sont solidaires de disques aptes à tourner librement autour de l'axe de rotation, et des roulements sont placés entre lesdits disques et sont fixés, par exemple, par des tiges sur l'axe de rotation.

Selon un autre mode de réalisation les deux éléments de l'armature sont solidaires d'hélices inversées l'une par rapport à l'autre et qui, placées au-dessus de la source de lumière, seront mises en rotation par le mouvement ascendant d'un fluide, avantageusement de l'air chaud.

Le nombre, les dimensions, et la position des fentes du premier élément d'une part, et des images du deuxième élément d'autre part, sont choisis en fonction de l'effet recherché pour la réalisation de l'animation.

La vitesse de rotation de l'armature est choisie selon l'effet recherché pour l'animation du décor.

D'autres particularités et avantages de l'invention apparaîtront à la lecture de la description donnée à titre d'exemple illustratif et non limitatif et faite en référence aux dessins annexés sur lesquels :
- la figure 1, représente une vue de face et en coupe d'un mode préféré de réalisation du dispositif selon l'invention,
- la figure 2, représente une vue de face et une coupe concernant un deuxième mode de réalisation pour les moyens de rotation.

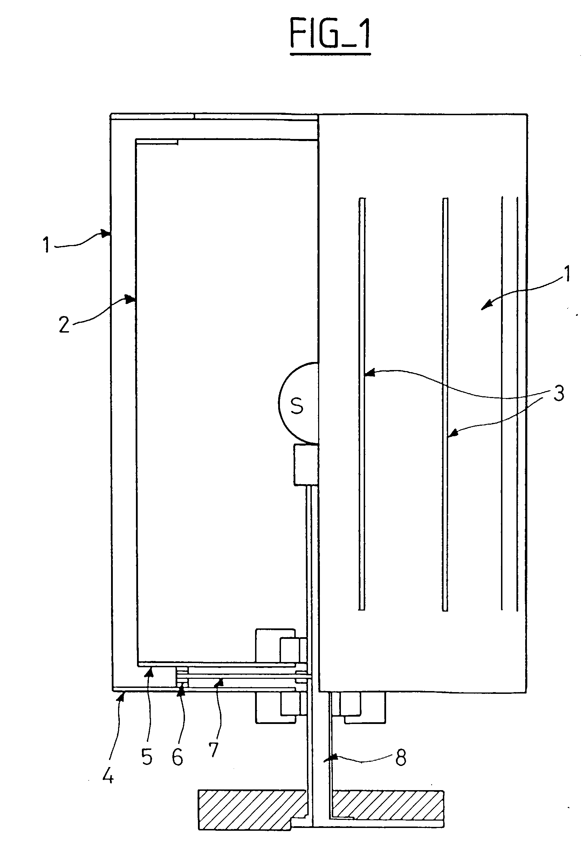

La figure 1 schématise une lampe conforme à l'invention. Une source lumineuse S est fixée au sommet du pied 8 de la lampe. L'abat-jour, dénommé armature par la suite, comporte deux éléments 1 et 2. Ces deux éléments sont de forme identique mais d'échelles différentes afin d'être placés l'un à l'intérieur de l'autre, de manière concentrique, autour du pied 8 et de la source lumineuse S.

Le premier élément, référencé 1, est constitué d'une paroi opaque. Des fentes 3 sont pratiquées dans cette paroi, de telle sorte qu'elles soient contenues dans des plans contenant l'axe de rotation 8.

Le deuxième élément, référencé 2, est constitué d'une paroi de forme identique à celle du premier élément. Il présente en revanche des dimensions différentes du premier élément. Il peut en effet être soit plus petit et placé à l'intérieur du premier élément 1, ou bien plus grand et placé à l'extérieur du premier élément 1.

Ce deuxième élément 2 est destiné à supporter le décor qui sera animé. Sa paroi de constitution peut être translucide ou même transparente. Le décor est réalisé à partir de dessins, de photographies, de découpages, de collages, etc...

Les deux éléments sont placés l'un à l'intérieur de l'autre, et de manière concentrique, autour du pied 8 de la lampe qui supporte la source lumineuse S. Le pied 8 constitue alors un axe de rotation autour duquel les deux éléments 1 et 2 de l'armature sont entraînés en rotation par un moteur, un mécanisme à ressort type boîte à musique, ou bien par tout autre moyen tel que manuel, éolien, thermique, etc...

La dimension des fentes 3 du premier élément 1, leur nombre et la distance les séparant déterminent directement la dimension des images du décor, leur nombre et la distance les séparant, ainsi que la vitesse de rotation de l'ensemble. Ces paramètres sont choisis en fonction de l'effet recherché pour l'animation du décor. Ils permettent en particulier de déterminer l'intensité lumineuse, l'impression de ralenti ou d'accéléré, de netteté ou de flou, la dimension des images animées etc...

La figure 1 représente un exemple d'un mode préféré de réalisation selon lequel le deuxième élément 2, translucide et portant le décor, est placé à l'intérieur du premier élément 1, opaque et percé des fentes 3, et tourne en sens inverse dudit premier élément. Bien sûr, comme il a été décrit précédemment, il est possible de placer le premier élément 1 dans le deuxième élément 2.

De plus, le cas représenté sur la figure est celui où la forme des éléments 1 et 2 est cylindrique. Les fentes 3 sont alors parallèles à l'axe 8 et parallèles entre elles. Mais les éléments 1 et 2 peuvent prendre toutes autre forme permettant leur rotation l'un dans l'autre telle que sphérique, conique, etc... Les fentes 3 seront pratiquées chacune de manière à ce qu'elles soient contenues dans des plans contenant l'axe de rotation, soit par exemple d'un pôle à l'autre pour le cas d'une sphère, du sommet vers la base pour le cas d'un cône, etc...

Par ailleurs, afin de permettre d'obtenir une animation du décor, les deux éléments 1 et 2 sont entraînés dans un sens de rotation opposé l'un par rapport à l'autre. Pour cela, les deux éléments 1 et 2 de l'armature peuvent par exemple être tous deux solidaires de disques respectivement référencés 4 et 5 aptes à tourner librement autour de l'axe 8 de la lampe. Des roulements 6 sont de préférence placés entre les disques 4 et 5, et fixés sur l'axe 8 de la lampe par les tiges 7. Grâce à ces roulements, le disque externe 4 solidaire de l'élément extérieur, c'est à dire l'élément 1 supportant les fentes 3 dans l'exemple de la figure, peut entraîner le disque interne 5 dans sa rotation et en sens inverse du mouvement.

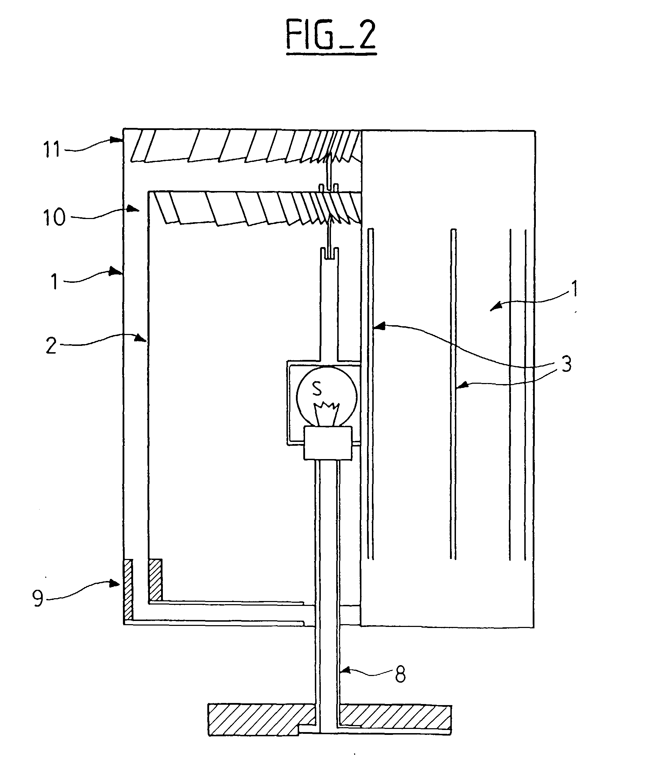

Cependant il est possible de faire tourner les deux éléments 1 et 2 dans des sens inverses l'un de l'autre par d'autres dispositifs comme celui qui consiste à rendre les éléments 1 et 2 solidaires d'hélice inversées qui, placées au-dessus de la source de lumière S, seront mises en rotation par exemple par l'ascension de l'air chaud dégagé par la source de lumière S. Dans ce mode de réalisation on placera un leste 9 dans la partie basse du dispositif. Ce mode de réalisation est illustré par la figure 2.

La vitesse de rotation des deux éléments est choisie selon l'effet recherché pour l'animation du décor, notamment pour l'effet d'accélération ou de ralenti.

Il est préférable de placer une paroi translucide entre la source lumineuse S et l'oeil d'un observateur, afin de faire apparaître le décor animé sans éblouir cet observateur via les fentes. Dans le cas où le deuxième élément 2 est constitué d'une paroi translucide, celle-ci suffit pour ne pas éblouir l'observateur, qu'elle se trouve à l'intérieur ou à l'extérieur du premier élément 1.

En revanche, dans le cas où le deuxième élément 2 est constitué d'une paroi transparente, il est préférable d'utiliser une troisième paroi en matière translucide. Cette paroi pourra être fixée soit à l'intérieur, soit à l'extérieur du plus petit des éléments 1 et 2, ou directement sur les fentes 3.

A titre d'exemple non limitatif, pour restituer un mouvement naturel de façon réaliste, on peut pratiquer 24 fentes équidistantes dans le premier élément 1, placer 24 images sur le deuxième élément 2 et faire tourner l'ensemble dans des sens opposés à la vitesse de 1 tour par seconde.

## Revendications

1. Dispositif d'éclairage comportant une source lumineuse (S) et une armature, caractérisé en ce que ladite armature comporte deux éléments (1) et (2) concentriques et de forme identique aptes à tourner librement, l'un à l'intérieur de l'autre, autour d'un axe (8) sur lequel est fixée la source lumineuse (S)

2. Dispositif selon la revendication 1, caractérisé en ce que le premier élément (1) de l'armature est constitué d'une paroi opaque percée de fentes (3) disposées régulièrement et obtenues par l'intersection du volume de la paroi et de plans contenant l'axe de rotation (8).

3. Dispositif selon la revendication 2, caractérisé en ce que les fentes (3) sont parallèles à l'axe (8) de rotation.

4. Dispositif selon la revendication 1, caractérisé en ce que le deuxième élément (2) de l'armature est constitué d'une paroi translucide et supporte un décor destiné à être animé.

5. Dispositif selon la revendication 4, caractérisé en ce qu'il comporte en outre une troisième paroi en matière translucide placée à l'intérieur ou à l'extérieur du plus petit des éléments (1) et (2) de l'armature ou sur les fentes (3) du premier élément (1).

6. Dispositif selon la revendication 5, caractérisé en ce qu'il comporte en outre une troisième paroi en matière translucide placée à l'intérieur des éléments (1) et (2) de l'armature ou sur les fentes (3) du premier élément (1).

7. Dispositif selon l'une quelconque des revendications précédentes, caractérisé en ce que les deux éléments (1) et (2) de l'armature tournent en sens inverse l'un par rapport à l'autre.

8. Dispositif selon l'une quelconque des revendications 1 à 6, caractérisé en ce que le deuxième élément (2) est placé à l'intérieur du premier élément (1).

9. Dispositif selon l'une quelconque des revendications précédentes, caractérisé en ce qu'il comprend des moyens d'entraînement pour obtenir le mouvement de rotation.

10. Dispositif selon la revendication 9, caractérisé en ce que les moyens d'entraînement sont obtenus par un moteur, ou par un mécanisme de ressort, ou manuellement ou par le déplacement d'un fluide (de l'air chaud un gaz ou un liquide).

11. Dispositif selon l'une quelconque des revendications précédentes, caractérisé en ce que les deux éléments (1) et (2) de l'armature sont solidaires de disques (4) et (5) aptes à tourner librement autour de l'axe (8) de rotation, et en ce que des roulements (6) sont placés entre lesdits disques (4) et (5) et sont fixés, par exemple, par des tiges (7) sur l'axe (8) de rotation.

12. Dispositif selon l'une quelconque des revendications 1 à 10, caractérisé en ce que les deux éléments (1) et (2) de l'armature sont solidaires d'hélices inversées l'une par rapport à l'autre et qui, placées au-dessus de la source de lumière (S), seront mises en rotation par le mouvement ascendant de l'air chaud.

13. Dispositif selon l'une quelconque des revendications précédentes, caractérisé en ce que le nombre, les dimensions, et la position des fentes (3) du premier élément (1) d'une part, et des images du deuxième élément (2) d'autre part, sont choisis en fonction de l'effet recherché pour la réalisation de l'animation.

14. Dispositif, selon l'une quelconque des revendications précédentes, caractérisé en ce que la vitesse de rotation de l'armature est choisie selon l'effet recherché pour l'animation du décor.
